# EUROPEAN PATENT APPLICATION

(11) **EP 0 647 543 A1**
(43) Date of publication of application: **12.04.1995**
(21) Application number: 94306868.4
(22) Date of filing: 20.09.1994
(51) Int. Cl.: B60P 1/44

(54) **Improvements in platform lifts**

(30) Priority: 11.10.1993 GB 9320898
(71) Applicant: RATCLIFF TAIL LIFTS LIMITED, Welwyn Garden City Hertfordshire AL7 1CT (GB)
(72) Inventor: Phypers, Kevin, Hertfordshire AL7 2PW (GB)
(74) Representative: Bucks, Teresa Anne

(57) **Abstract**

The invention relates to improvements in platform lifts which can be used to raise a load, such as a handicapped person, to a higher level to enable them to enter a vehicle or for raising goods for loading light-van lifts and the like. The invention therefore provides a platform lift (10) comprising platform support means (11,14,15,17,18), first actuation means for raising and lowering said platform support means, a platform (19) pivotally attached to said platform support means, and second actuation means for opening and closing said platform, said second actuation means (26,27) comprising a cam (27) mounted on said platform support means and a cam follower (26) mounted on an articulated connecting rod (22,24), said connecting rod being pivotally connected at opposite ends thereof to the platform support means and the platform.

## Description

The invention relates to improvements in platform lifts which can be used to raise a load, such as a handicapped persons to a higher level to enable them to enter a vehicle or for raising goods for loading light-van lifts and the like.

For handicapped persons with limited mobility or those confined to wheelchairs, it is particularly difficult to climb steps or enter and exit vehicles. A number of lifts particularly for vehicles, have therefore been devised which lift the passenger from ground level to the level of the floor of the vehicle so that the wheelchair can be pushed into the vehicle or the passenger can walk therein. Similar lifts have been designed to facilitate the loading of vans.

One such lift is described in EP-A1-0119914. This prior art device utilises a parallelogram which is deformable under the action of a hydraulic drive piston. As the parallelogram is deformed under action of the piston, the arms of the parallelogram supporting the platform are lowered. The platform itself is caused to pivot from a stowed vertical position to an open horizontal position under the action of a connecting rod of variable length.

As the connecting rod of this device is a lost motion type of device, it relies on gravity or spring means to open the platform. There is a significant danger with such a device in that if it is accidentally prevented from opening as it is lowered, say by a handbag strap or the edge of a door, once the obstruction is removed, the platform would fall open out of control. Obviously, if there are handicapped people or people in wheelchairs in the vicinity of the platform, this could be potentially dangerous.

Again, platform opening and closing motions with these prior art devices are characterised by very high accelerations and decelerations at either end of the travel.

It is therefore an object of the present invention to provide a platform lift which overcomes these disadvantages and has improved safety features.

According to the invention there is provided a platform lift comprising platform support means, first actuation means for raising and lowering said platform support means, a platform pivotally attached to said platform support means, and second actuation means for opening and closing said platform, said second actuation means comprising a cam mounted on said platform support means and a cam follower mounted on an articulated connecting rod, said connecting rod being pivotally connected at opposite ends thereof to the platform support means and the platform.

There will now be described, by way of example only, a preferred embodiment of the invention, with reference to the accompanying drawings, in which:-
Figure 1 is a side elevation of a lift according to the invention;
Figure 2 is an enlarged view of a cam arrangement of the lift of Figure 1;
Figure 3 is a side elevation of the lift of Figure 1 open on the ground;
Figure 4 is a side elevation of the lift of Figure 1 at floor level; and
Figure 5 is a side elevation of the lift of Figure 1 in a stowed position.

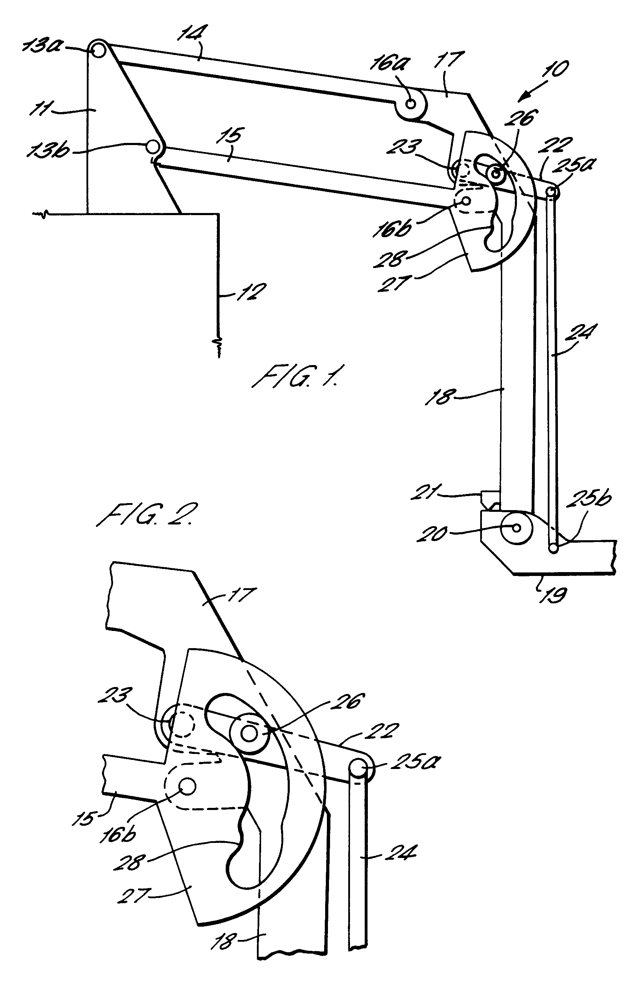

Referring to Figure 1, a platform lift 10 is firmly attached at its base 11 to, say, the deck 12 of a vehicle. Obviously, it could be used in any other circumstances where it is required to raise persons of limited mobility or in wheelchairs. Pivotally attached to the base 11 at pivot points 13a, 13b are two side arms 14, 15. Attached to the side arms 14, 15 at pivot points 16a, 16b is an upper arm 17. The upper arm 17, side arms 14, 15 and base 11 form a deformable parallelogram. Connected substantially diagonally across the parallelogram, but not shown, is a hydraulic actuator. This can be a standard hydraulic piston and cylinder arrangement or any other suitable extensible actuator.

The upper arm 17 extends beyond pivot point 16b to form a drop arm 18. The lowest end of the drop arm 18 is attached to a platform 19 at pivot point 20. The drop arm 18 also carries a stop 21 which prevents the platform 19, when opening, from pivoting beyond an angle of 90° to the drop arm 18.

A further connection is provided between the upper arm 17 and the platform 19. This connection is made by a lever arm 22 which is pivotally connected at pivot point 23 to the upper arm 17 and a tie rod 24 which is pivotally connected at pivot points 25a, 25b to the lever arm 22 and platform 19, respectively. Attached to the lever arm 22 is a cam roller 26.

The end of the side arm 15 remote from its attachment to the base 11 is formed as a cam 27. The cam roller 26 follows the cam profile 28 which is in the form of a two-faced groove, or slot. The profile is preferably of compound arcuate form.

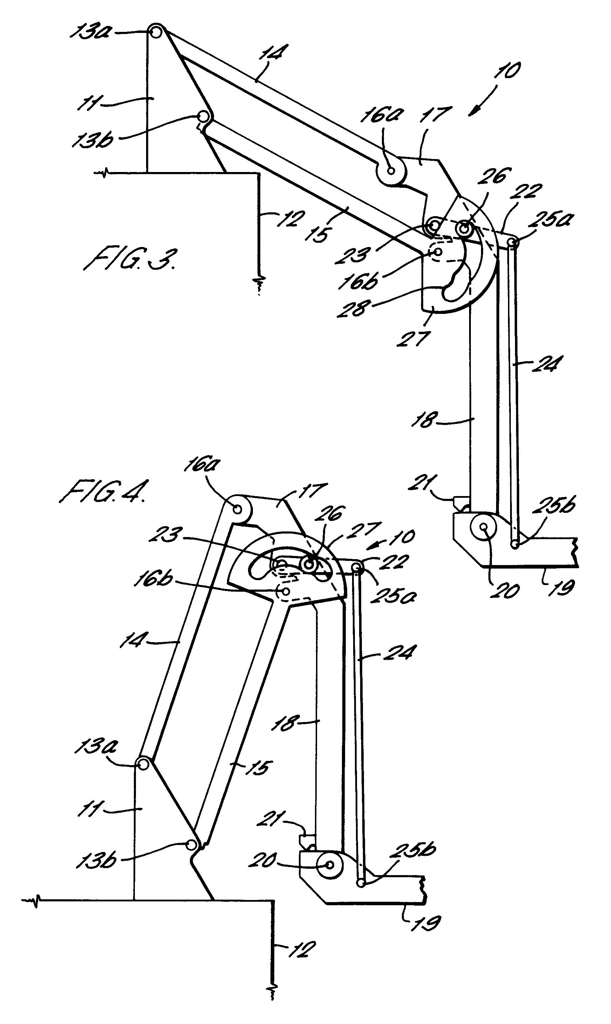

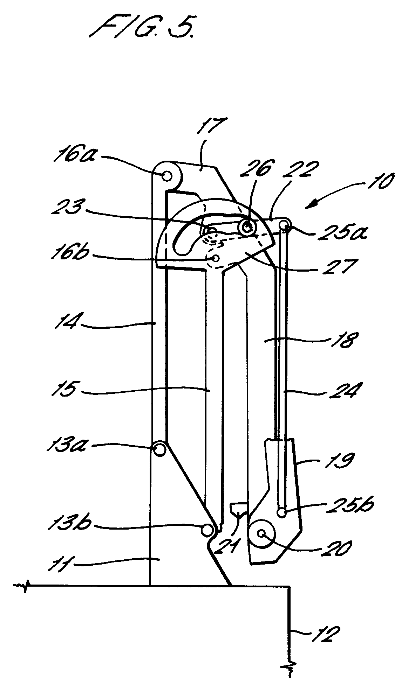

The sequence of opening and closing the lift 10 can be seen from Figures 3 to 5. Figure 3 shows the lift 10 in its open position with the platform 19 open at 90° to the drop arm, at ground level and the cam roller 26 at an extreme end of the cam profile 28. To commence closing, the hydraulic actuator (not shown) which is connected diagonally from pivot 5 to the upper arm 17 is operated to extend. To accommodate the extension, the parallelogram is forced to deform and move upwardly to the position shown in Figure 4. To enable this to happen, the side arms 14, 15 rotate about their pivot point 13a, 13b. As side arm 15 rotates, cam 27 is also caused to rotate relative to the upper arm 17. The cam roller 26 mounted on the lever arm 22 runs along the cam 27 so that the altitude of lever arm 22 is at a rate governed by the inner surface of the cam profile 28. This enables the position of the lever arm 22 and tie rod 24 to remain fixed relative to each other until the height of the platform 19 reaches the level of the deck 12 of the vehicle. Further extension of the hydraulic actuator causes further deformation of the parallelogram and rotation of side arms 14, 15 to a substantially vertical stowed position as shown in Figure 5. This in turn causes further rotation of the cam 27. The cam roller 26 continues to travel along the cam profile 27 which is shaped so as to cause the lever arm 22 to pivot, with pivot point 25a moving upwardly. This in turn lifts the tie rod 24 which in turn lifts and rotates the platform 19 until it reaches the stowed vertical position.

To open the lift 10, the process is reversed. In one embodiment of the invention the cam roller 26 follows the opposite outer surface of the cam profile 28 and rolls along it at an altitude again governed by the profile. As the cam roller 26 is always held in contact with the cam profile 28, the platform 19 is effectively driven under control of the cam 27 to open and does not rely on gravity to drop open. Therefore, any obstruction of the platform 19 cannot result in it subsequently dropping open at the instant the obstruction is removed, as in prior art devices.

The cam roller 26, however, does not necessarily need to be held in contact with the outer surface of the cam profile 28. If the platform has a self-opening moment due to its own weight, the roller 26 may stay in contact with the inner surface of the cam, as when closing. However, if the platform should hesitate in its opening movement, the drive would be taken over by the outer surface of the profile.

The cam profile is preferably shaped such that the opening of the platform 19 slowly accelerates at the beginning of the process, but decelerates as it moves towards its fully open position.

## Claims

1. A platform lift (10) comprising platform support means (11,14,15,17,18), first actuation means for raising and lowering said platform support means, a platform (19) pivotally attached to said platform support means, and second actuation means for opening and closing said platform, characterised in that said second actuation means (26,27) comprise a cam (27) mounted on said platform support means and a cam follower (26) mounted on an articulated connecting rod (22,24), said connecting rod being pivotally connected at opposite ends thereof to the platform support means and the platform.

2. A platform lift (10) as claimed in claim 1 in which the cam (27) is a double acting cam.

3. A platform lift (10) as claimed in claim 1 or claim 2 in which the cam (27) has a cam profile (28) which accelarates the opening of the platform (19) as it leaves its closed position.

4. A platform lift (10) as claimed in any one of the preceding claims in which the cam (27) has a cam profile (28) which decelarates the opening of the platform (19) as it nears its opened position.

5. A platform lift (10) as claimed in any one of the preceding claims in which the cam follower (26) always remains in engagement with the cam (27).

6. A platform lift (10) as claimed in any one of the preceding claims in which the first actuation means comprise a hydraulic piston and cylinder arrangement.

7. A platform lift (10) as claimed in any one of the preceding claims in which the platform support means (11,14,15,17,18) comprise a pair of side arms (14,15) pivotally connected at first ends thereof to a base (14), and at opposite ends thereof to an upper arm (17).

8. A platform lift (10) as claimed in claim 7 in which the said upper arm (17) is extended beyond the pivotal connection (16b) with one of said side arms (15) to form an extended arm (18), said platform (19) being pivotally attached to said extended arm.

9. A platform lift (10) as claimed in claim 7 or claim 8 in which the cam (27) is attached to, or forms an extension of, one of the side arms (15).

10. A platform lift (10) as claimed in claim 8 or claim 9 in which a stop (21) is mounted on said extended arm (18) to prevent the platform (19) from pivoting more than substantially 90° to the extended arm.

11. A platform lift (10) as claimed in any one of the preceding claims in which articulated members of said connecting rod (22,24) remain in a substantially fixed position relative to each other as the open platform (9) is raised or lowered between ground level and floor height.

12. A platform lift (10) as claimed in any one of the preceding claims in which articulated members of said connecting rod (22,24) pivot relative to each other as the platform (19) is opened or closed, the distance between the end pivot points of the actuation means decreasing to cause the platform to pivot closed.
